# DEMANDE DE BREVET EUROPEEN

(11) **EP 2 068 543 A1**
(43) Date de publication de la demande: **10.06.2009**
(21) Numéro de dépôt: 08169879.7
(22) Date de dépôt: 25.11.2008
(51) Int. Cl.: H04M 3/533

(54) **Procédé de transmission d'un message dans un réseau de pairs**

(30) Priorité: 04.12.2007 FR 0759537
(71) Demandeur: FRANCE TELECOM, 75015 Paris (FR)
(72) Inventeur: Petion, Romaric, 22560 Trebeurden (FR); Neveux, Didier, 22140, CAVAN (FR)
(74) Mandataire: Delumeau, François Guy

(57) **Abrégé**

Ce procédé de transmission de messages, dans lequel un déposant X souhaite envoyer un message (M) à un destinataire (Y) indisponible comporte une étape d'envoi, par le déposant (X), d'une requête d'appel (INV1) à un routeur d'appel (10) pour établir une communication avec le destinataire (Y) ; une étape d'identification, par ce routeur (10), d'au moins un pair dépositaire dans un réseau de pairs (1), disponible et ayant les ressources (HD) suffisantes pour mémoriser ce message (M) ; une étape d'établissement d'un flux de communication (FC) entre le déposant X et le dépositaire (PR) pour la mémorisation du message dans les ressources (HD) du pair dépositaire, et une étape de stockage dudit message (M) dans une zone de sauvegarde centralisée (100).

## Description

### Arrière-plan de l'invention

La présente invention se rapporte à un service de messagerie et plus particulièrement à un procédé de gestion de message dans un réseau de télécommunications de type "pair à pair" (en anglais "peer to peer").

L'invention peut notamment être utilisée pour des messages vocaux ou visiophoniques.

Plus généralement, un message peut être constitué par un fichier informatique quelconque.

Dans le domaine des messages vocaux ou visiophoniques, il existe à ce jour principalement deux solutions pour déposer un message à un destinataire en cas d'occupation ou de non réponse du terminal de ce dernier.

On connaît tout d'abord les répondeurs classiques attachés au terminal destinataire. Mais cette solution présente un inconvénient majeur en ce qu'elle nécessite l'acquisition d'un équipement spécifique (répondeur) pour la réception et l'enregistrement des messages. Au surplus, l'équipement répondeur ne peut être joint que si le terminal destinataire est lui-même accessible.

Cette solution non satisfaisante ne peut faire l'objet d'un service offert par un opérateur du réseau de télécommunications.

On connaît aussi un service disponible auprès des opérateurs de télécommunications permettant à l'appelant de déposer un message sur une plate-forme de messagerie gérée par cet opérateur.

L'inconvénient majeur de cette deuxième solution réside dans le fait que le service de messagerie (déroulement de la logique de service, gestion du dialogue avec l'utilisateur, annonces vocales,...) est géré par une plate-forme de messagerie centralisée de l'architecture du réseau de télécommunications.

De façon évidente, cette centralisation rend la solution technique peu robuste en cas d'attaque ou de dysfonctionnement, sa gestion onéreuse et son dimensionnement problématique.

Le document WO2007/003850 propose une solution pour mettre en place un service de messagerie dans lequel les messages sont enregistrés dans les pairs d'un réseau de pairs.

En décentralisant avantageusement le déroulement de la logique de service au sein du réseau de pairs, cette solution résout les problèmes de sécurité et de dimensionnement de l'art antérieur cité précédemment.

Elle présente aussi l'avantage de ne pas nécessiter de terminaux spécifiques pour l'archivage du message, les pairs du réseau étant le plus souvent constitués par des ordinateurs personnels utiles à d'autres tâches, notamment pour accéder au réseau Internet.

Mais le déploiement d'un tel service rencontre des freins psychologiques, les utilisateurs étant peu enclins à enregistrer des messages personnels destinés à une première personne dans le pair d'un tiers, même si ces messages sont cryptés.

### Objet et résumé de l'invention

La présente invention propose un procédé de gestion de messages qui ne présente pas les inconvénients précités.

Selon un premier aspect, l'invention vise un procédé de transmission d'un message émis par un premier dispositif dit "déposant" à destination d'un deuxième dispositif dit "destinataire" comportant, lorsque le destinataire est indisponible pour recevoir ce message, une étape d'envoi du message à un pair d'un réseau de pairs dit "pair dépositaire". Ce procédé comporte :
- une étape de transfert du message par le pair dépositaire dans une zone de sauvegarde centralisée ;
- une étape de notification au destinataire d'une information représentative du fait qu'un message qui lui était destiné est mémorisé dans la zone de sauvegarde centralisée ; et
- une étape d'obtention du message, par le destinataire, à partir de la zone de sauvegarde centralisée.

Conformément à l'invention, la logique du service de messagerie est mise en oeuvre par des pairs du réseau de pairs, mais il n'est pas nécessaire que les dispositifs déposants ou destinataires du message soient eux-mêmes des pairs de ce réseau.

Ainsi, l'invention utilise avantageusement les abondantes ressources des pairs du réseau pour le déroulement de la logique de service de messagerie, diminuant ainsi fortement les coûts d'infrastructure et de maintenance les plus importants pour l'opérateur.

Conformément à l'invention, les messages ne sont pas enregistrés dans les pairs du réseau mais dans une zone de sauvegarde centralisée gérée par l'opérateur.

La solution proposée par l'invention combine avantageusement les caractéristiques d'un réseau de pairs avec les caractéristiques d'une zone de sauvegarde centralisée, ce qui va à l'encontre de l'opinion prévalant parmi les spécialistes du domaine des réseaux de pairs et du domaine du centralisme.

En pratique, une zone de sauvegarde centralisée au sens de l'invention est une zone de sauvegarde avec une adresse fixe. Une telle adresse peut être par exemple une adresse IP, une URL (notamment une adresse traduisible par un DNS), ou une adresse SIP transmissible par un proxy SIP.

Une zone de sauvegarde centralisée au sens de l'invention peut être constituée par une batterie de disques durs avec une adresse IP fixe mémorisée par les pairs dépositaires.

Finalement, la charge de l'opérateur consiste principalement à assurer la sécurité des messages enregistrés dans cette batterie de disques durs, la gestion du service de messagerie en elle-même, à savoir le déroulement de la logique de service, la gestion des messages d'annonce et de l'interface de communication avec l'utilisateur étant gérés par les pairs du réseau.

Dans un mode particulier de réalisation, le procédé de transmission selon l'invention comporte :
- une étape d'identification du pair dépositaire par un routeur d'appel connecté au réseau de pairs, parmi les pairs disponibles et ayant des ressources pour mémoriser le message,
- une étape de mémorisation du message par le pair dépositaire dans les ressources ; et
- une étape d'effacement du message des ressources après l'étape de transfert de message dans la zone de sauvegarde centralisée.

Dans ce mode de réalisation, le routeur d'appel peut être du type de celui décrit dans le document WO 2007/003850.

Ce routeur d'appel peut être centralisé ou distribué. Il comporte :
- des moyens pour recevoir, dans un flux de signalisation, une première requête d'appel en provenance du déposant, celui-ci souhaitant établir une communication avec le destinataire, pour lui envoyer un message ; et
- des moyens pour détecter que le destinataire n'est pas disponible pour établir la communication ;
- des moyens pour se connecter à un réseau de pairs et pour communiquer avec des pairs de ce réseau ;
- des moyens pour identifier, dans le réseau de pairs, au moins un pair dépositaire, disponible et ayant des ressources suffisantes pour mémoriser le message ;
- des moyens pour envoyer, dans le flux de signalisation, une deuxième requête d'appel à destination du pair dépositaire, dans le but d'établir un flux de communication entre le déposant et le pair dépositaire ; et
- des moyens pour établir le flux de communication, en fonction de la réponse à la deuxième requête d'appel.

Ce routeur d'appel a deux fonctions principales, d'une part, identifier au moins un pair disponible et ayant les ressources suffisantes pour mémoriser temporairement un message en vue de son stockage définitif dans la zone de stockage, et d'autre part établir un flux de communication entre le dispositif déposant et ce pair dépositaire.

Dans une implémentation particulière de l'invention, le protocole utilisé pour la signalisation est préférentiellement conforme au protocole SIP tel que défini par l'IETF (Internet Engineering Task Force) dans le document RFC 3261.

En variante, tout autre protocole de signalisation peut être utilisé, et notamment les protocoles H323 et MGCP.

Selon un deuxième aspect, l'invention vise un dispositif susceptible d'être connecté à un réseau de pairs pour la mise en oeuvre du procédé de gestion de message tel que mentionné ci-dessus.

Ce dispositif comporte :
- des moyens pour recevoir un message émis par un premier dispositif dit "déposant" à destination d'un deuxième dispositif dit "destinataire" ; et
- des moyens pour transférer le message dans une zone de sauvegarde centralisée en vue de son obtention ultérieure par le destinataire, lorsque le destinataire est indisponible pour recevoir le message.

Corrélativement, l'invention concerne un procédé d'enregistrement de message, susceptible d'être mis en oeuvre par un dispositif pair dans un réseau de pairs. Ce procédé comporte :
- une étape de réception d'un message émis par un premier dispositif dit "déposant", à destination d'un deuxième dispositif dit "destinataire" ; et mémorisation du message dans les ressources précitées ;
- une étape de transfert du message dans une zone de sauvegarde centralisée en vue de son obtention ultérieure par le destinataire, lorsque le destinataire est indisponible pour recevoir le message.

Préférentiellement, le dispositif selon l'invention comporte :
- des moyens pour envoyer, sur ledit réseau de pairs, une information selon laquelle il est adapté à mettre en oeuvre un procédé de transmission de messages selon l'invention ;
- des moyens pour réserver des ressources nécessaires à la mémorisation du message ;
- des moyens pour mémoriser le message dans les ressources ; et
- des moyens pour effacer le message des ressources après le transfert du message dans la zone de sauvegarde centralisée.

Dans une première variante de réalisation, cette information est diffusée spontanément par les pairs du réseau adaptés à mettre en oeuvre un procédé de transmission de messages.

Dans une autre variante, le routeur d'appel est adapté à émettre une requête vers un dispositif pair pour savoir si celui-ci est adapté ou non à mettre en oeuvre le procédé de transmission de messages et à recevoir, le cas échéant, l'information précitée en réponse à cette requête.

Préférentiellement, les moyens du routeur d'appel pour identifier un pair dépositaire sont adaptés :
- à présélectionner le pair dépositaire dans une liste de pairs adaptés à mettre en oeuvre le procédé de transmission de messages ;
- à envoyer au pair dépositaire, sur le réseau de pairs, une requête pour vérifier s'il est disponible et s'il possède effectivement des ressources disponibles pour mémoriser le message.

Ainsi, grâce à cette caractéristique, le routeur d'appel garantit que le pair dépositaire est effectivement disponible et qu'il possède les ressources nécessaires pour mémoriser le message.

L'homme du métier comprendra que cette requête peut être de deux types. Selon un premier type, cette requête permet de demander explicitement si les ressources disponibles pour mémoriser le message sont présentes chez le pair dépositaire. Selon un second type, cette requête demande la quantité de ressources disponibles, et le routeur d'appel détermine par lui-même si celles-ci sont suffisantes pour que le pair dépositaire puisse mémoriser le message.

Le routeur d'appel peut aussi, dans un mode de réalisation, envoyer explicitement une requête pour réserver les ressources du pair dépositaire nécessaires pour recevoir et mémoriser le message, lorsque ce routeur d'appel a déterminé que ces ressources étaient suffisantes.

Préférentiellement, le routeur d'appel insère dans la requête de réservation, un identifiant du déposant et du destinataire du message.

Dans un mode particulier de réalisation, le dispositif selon l'invention comporte des moyens pour extraire de la requête de réservation, au moins un identifiant du destinataire du message, et des moyens pour générer un message d'invitation à partir de cet identifiant, et pour émettre ce message d'invitation, à destination du déposant.

Ces identifiants peuvent notamment permettre au pair dépositaire de générer un message d'invitation personnalisé pour le déposant du message.

L'identifiant du destinataire peut également permettre au pair dépositaire de contacter ultérieurement le destinataire pour le notifier de l'enregistrement du message.

Dans un mode préféré de réalisation, le routeur d'appel comporte des moyens pour obtenir du pair dépositaire, via le réseau de pairs, un état de stockage du message dans la zone de stockage centralisée, et des moyens pour envoyer cet état au déposant, dans le flux de signalisation.

Selon cette caractéristique avantageuse, le routeur d'appel maîtrise l'état des enregistrements effectués, et est en mesure de contacter les différents destinataires pour les notifier des messages enregistrés et qui leur sont destinés.

Préférentiellement, les moyens d'identification du routeur d'appel sont adaptés à sélectionner le déposant en tant que pair dépositaire si le déposant est un pair du réseau de pairs, et s'il possède effectivement des capacités disponibles pour mémoriser le message.

Dans ce cas, après mémorisation temporaire du message, le déposant stocke par lui-même le message dans la zone de stockage centralisée sans que ce message ne transite par d'autres pairs du réseau.

Préférentiellement, les moyens d'identification du routeur d'appel sont aussi adaptés à sélectionner le destinataire en tant que pair dépositaire si celui-ci est un pair du réseau de pairs et s'il possède effectivement des capacités disponibles pour mémoriser le message.

L'homme du métier comprendra que cette caractéristique peut être mise en oeuvre quand un flux de communication peut être établi avec le pair destinataire, mais que celui-ci n'est pas disponible pour recevoir directement le message du déposant. Le fait de sauvegarder le message dans une zone de sauvegarde centralisée permet une consultation de message par un terminal quelconque.

Comme mentionné précédemment, de façon préférée, le dispositif dépositaire selon l'invention est adapté à générer un message d'invitation à partir de l'identifiant du destinataire extrait de la requête de réservation reçue du routeur d'appel, et à émettre ce message d'invitation pour le déposant, dans le flux de communication.

Préférentiellement, le pair dépositaire selon l'invention comporte des moyens pour extraire de la requête de réservation au moins un identifiant du destinataire du message et des moyens pour générer un identifiant de ce message.

Préférentiellement, le dispositif pair selon l'invention comporte des moyens pour envoyer au déposant, lorsque le message a été stocké avec succès dans la zone de stockage, un message d'acquittement dans le flux de communication et/ou une information d'acquittement dans le canal de signalisation.

Cette information (respectivement ce message) d'acquittement permet de rassurer le déposant quant au succès de l'enregistrement de son message.

Dans un mode préféré de réalisation, le dispositif dépositaire selon l'invention comporte des moyens pour envoyer au déposant, pendant toute la durée au cours de laquelle le flux de communication est établi, un message de retour d'appel dans le flux de communication et/ou une information de retour d'appel dans le canal de signalisation.

Cette information (ou ce message de retour d'appel) peut par exemple être constituée par une petite animation visuelle qui s'exécute sur le terminal du déposant.

Dans un mode préféré de réalisation, le dispositif dépositaire selon l'invention comporte les fonctionnalités traditionnelles des répondeurs téléphoniques.

Ainsi, dans un mode préféré de réalisation, le dispositif dépositaire comporte des moyens pour envoyer dans le flux de communication un message de confirmation, pour proposer à l'utilisateur du dispositif déposant de réécouter, modifier ou supprimer le message, et des moyens pour retransmettre le message dans le flux de communication, le remplacer ou le supprimer de la zone de stockage en fonction de la réponse au message de confirmation.

Selon une implémentation préférée, les différentes étapes du procédé d'enregistrement sont déterminées par des instructions de programmes d'ordinateurs.

En conséquence, l'invention vise aussi un programme d'ordinateur sur un support d'informations, ce programme étant susceptible d'être mis en oeuvre dans un ordinateur, ce programme comportant des instructions adaptées à la mise en oeuvre des étapes du procédé d'enregistrement tel que mentionné ci-dessus lorsqu'il est exécuté par ce routeur d'appel ou cet ordinateur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions par l'exécution des étapes d'un procédé d'enregistrement tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

L'invention vise aussi un système de messagerie comportant au moins un dispositif pair tel que décrit précédemment, et une zone de sauvegarde centralisée.

Dans un mode préféré de réalisation, ce système comporte en outre un routeur d'appel apte à détecter que le destinataire n'est pas disponible pour recevoir le message, à identifier le dépositaire parmi les pairs du réseau disponibles et ayant des ressources suffisantes pour mémoriser le message et à établir un flux de communication entre le déposant et le dépositaire.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente un routeur d'appel et un dispositif dépositaire conforme à l'invention ainsi que les différentes informations échangées entre les différents équipements impliqués dans l'enregistrement d'un message conformément à un procédé de transmission de message selon l'invention dans un mode préféré de réalisation ;
- la figure 2 représente, sous forme d'organigramme, les principales étapes d'un procédé de routage mis en oeuvre par un routeur d'appel utilisé dans le contexte d'un mode de réalisation de l'invention ; et
- la figure 3 représente, sous forme d'organigramme, les principales étapes d'un procédé d'enregistrement de message conforme à l'invention dans un mode préféré de réalisation.

### Description détaillée d'un mode de réalisation

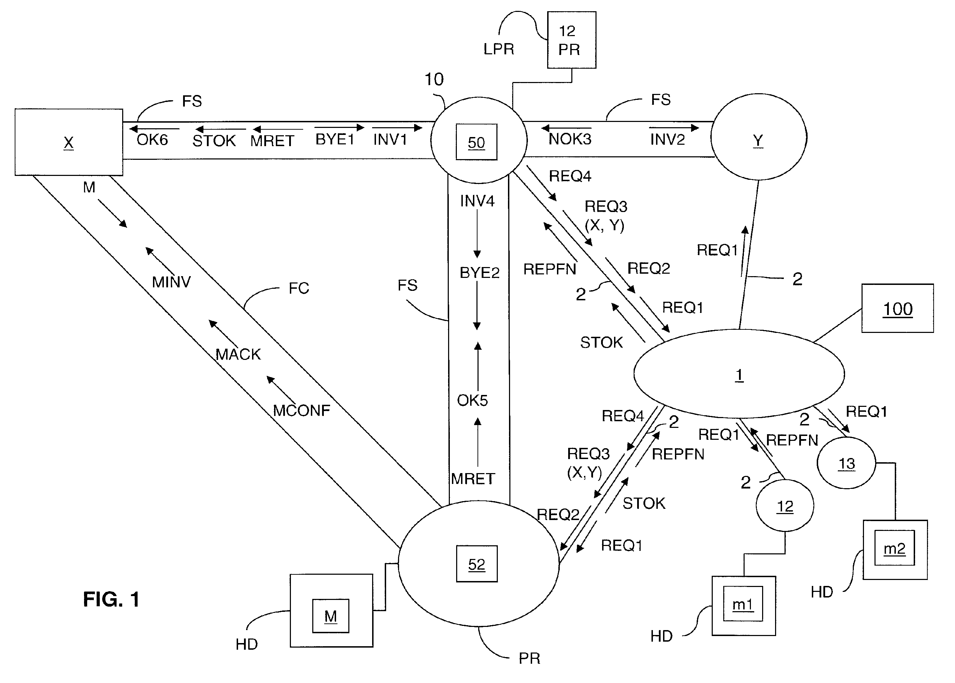

Sur la **figure 1****,** on a représenté un réseau de pairs 1, auxquels sont raccordés plusieurs dispositifs pairs 10, PR, Y, 12 et 13 et une zone de stockage de messages centralisée 100.

Sur cette figure, les équipements représentés par des formes rondes ou ovales sont des pairs. Ils sont reliés au réseau de pairs 1 par des liaisons 2.

Chacun de ces dispositifs pairs est typiquement constitué par un ordinateur, dont les moyens connus de traitement (CPU, ROM, RAM,...) n'ont pas été représentés par souci de clarté.

On a représenté sur cette figure les ressources HD (par exemple des disques durs), des dispositifs pairs PR, 12 et 13 dans lesquelles les messages peuvent être mémorisés temporairement avant leur stockage dans la zone de stockage centralisée 100.

On supposera dans cet exemple que le dispositif pair 12 et le dispositif pair PR sont adaptés à mettre en oeuvre un procédé d'enregistrement de message conforme à l'invention.

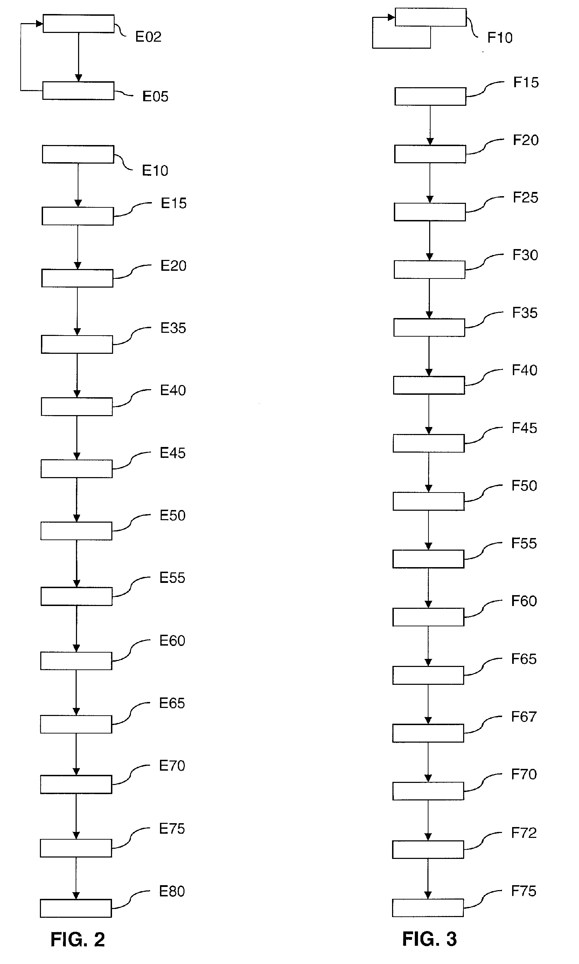

Ainsi, ces dispositifs comportent un support d'enregistrement 52 (par exemple une mémoire) dans lequel est enregistré un programme d'ordinateur PG2 comportant des instructions pour l'exécution des étapes du procédé d'enregistrement dont l'organigramme est donné à la **figure 3****.**

Nous supposerons maintenant que le dispositif X, appelé "déposant", souhaite envoyer un message M au dispositif Y, appelé "destinataire".

Dans le mode préféré de réalisation décrit ici, les dispositifs X et Y utilisent le protocole de contrôle d'appel SIP.

Les dispositifs déposant X et destinataire Y sont connus de l'homme du métier et ne font pas partie de l'invention. Ils peuvent être constitués par exemple par des terminaux téléphoniques ou visiophoniques.

Le proxy SIP 10 est un routeur d'appel. Il comporte une mémoire 50 dans laquelle est enregistré un programme d'ordinateur PG1 comprenant les instructions pour l'exécution des étapes du procédé de routage d'appel dont l'organigramme est représenté à la **figure 2****.**

Comme mentionné précédemment ci-dessus, le proxy SIP 10 est relié au réseau de pairs 1 par une liaison 2.

Dans le mode préféré de réalisation décrit ici, le proxy SIP 10 maintient une liste LPR des pairs 12, PR adaptés à mettre en oeuvre le procédé d'enregistrement de messages selon l'invention.

A cet effet, le proxy SIP 10 est adapté à émettre régulièrement, au cours d'une étape E02, une requête REQ1 à destination de pairs du réseau de pairs 1 pour obtenir les identifiants 12, PR de pairs mettant en oeuvre le procédé d'enregistrement de messages.

Cette requête REQ1 est reçue, notamment par les pairs PR et 12, au cours d'une étape F10. Au cours de cette même étape, ces dispositifs pairs PR, 12 répondent à cette requête REQ1 par une information REPFN reçue par le proxy SIP 10 à l'étape E05.

Au cours de cette même étape E05, le proxy SIP 10 met à jour la liste de pairs LPR.

En variante, des dispositifs pairs mettant en oeuvre le procédé d'enregistrement de messages peuvent envoyer spontanément l'information REPFN au proxy SIP 10 qui met à jour la liste LPR sur réception de cet envoi spontané.

Préférentiellement, l'envoi de la requête REQ1 par le proxy SIP 10 de l'étape E02, se fait régulièrement pour que la liste LPR soit maintenue à jour. En particulier, si un dispositif pair préalablement enregistré dans cette liste LPR ne répond pas à cette requête REQ1, le proxy SIP 10 supprime l'entrée correspondant à ce pair dans la liste LPR.

Le dispositif déposant X, souhaitant établir un appel avec le destinataire Y, envoie, via son client SIP, une requête INV1 au routeur d'appel 10 constitué ici par un serveur proxy SIP.

Le proxy SIP 10 tient un rôle traditionnel de serveur proxy. En conséquence, lorsqu'il reçoit la requête INV1 (étape E10), il envoie (étape E15) une requête d'appel INV2 à destination du destinataire Y, dans le flux de signalisation FS.

Nous supposerons ici que le destinataire Y est occupé, ou du moins qu'il ne peut pas recevoir le message du déposant X. Conformément au protocole SIP, le client SIP du destinataire Y envoie une réponse NOK3 au proxy SIP 10.

Traditionnellement, le proxy SIP connaît en statique l'adresse du serveur de répondeur vers lequel transférer l'appel du déposant X. Mais, dans la présente invention, cette adresse n'est pas connue a priori par le proxy 10. Elle doit être recherchée dynamiquement.

Donc, sur réception de la notification d'échec NOK3 (étape E20), le routeur d'appel 10 envoie à un pair dépositaire PR enregistré dans la liste LPR une requête REQ2 pour vérifier s'il est disponible et s'il possède des ressources pour mémoriser le message M (étape E35) en vue de son stockage dans l'unité de stockage 100.

On supposera dans cet exemple que le routeur d'appel 10 envoie dans un premier temps cette requête REQ2 au dispositif pair 12, mais que celui-ci n'est pas disponible, car déconnecté du réseau de pairs 1.

Au bout d'un certain temps, ne recevant pas de réponse à la requête REQ2, le proxy 10 envoie à nouveau cette requête REQ2 à destination d'un autre pair dépositaire PR de la liste LPR. Dans un autre mode de réalisation, le routeur d'appel envoie des requêtes REQ12 à plusieurs dispositifs pairs en parallèle.

Dans l'exemple décrit ici, la requête REQ2 est reçue par le pair dépositaire PR au cours d'une étape F15 du procédé d'enregistrement de message selon l'invention.

On supposera qu'au cours de cette même étape F15, le pair dépositaire PR renvoie au proxy 10, via le réseau de pairs 1, une information selon laquelle il possède suffisamment de ressources pour mémoriser un message M.

Cette réponse est reçue par le routeur d'appel 10 au cours d'une étape E40.

Au cours de cette même étape, le routeur d'appel 10 envoie, via le réseau de pairs 1, une requête REQ3 à destination du pair dépositaire PR pour lui demander de réserver des ressources pour l'enregistrement d'un message M.

Dans l'exemple décrit ici, ces ressources sont constituées par une zone mémoire du disque dur HD de ce pair PR.

Cette requête REQ3 de réservation de ressources comporte l'identifiant X du déposant et l'identifiant Y du destinataire du message M.

Cette requête REQ3 est reçue au cours d'une étape F20 par le pair dépositaire PR qui réserve des ressources dans son disque dur HD au cours d'une étape F25.

Cette étape F25 est suivie par une étape F30 au cours de laquelle le dispositif répondeur PR envoie, via le réseau de pairs 1, une réponse positive au proxy SIP 10.

Cette réponse positive est reçue par le proxy SIP au cours d'une étape E45.

Au cours de cette même étape E45, le proxy SIP 10 ayant identifié le dispositif pair PR comme étant disponible et avec des ressources réservées pour l'enregistrement temporaire d'un message, envoie, via le flux de signalisation FS, une requête INV4 au pair dépositaire PR conformément au protocole SIP.

Cette requête INV4 est reçue par le pair dépositaire PR au cours d'une étape F35.

On supposera, dans l'exemple décrit ici, que le pair dépositaire PR accepte cette invitation du fait que les ressources nécessaires ont été précédemment réservées (étape E25).

Conformément au protocole SIP, le pair dépositaire PR envoie dans le flux de signalisation FS une notification d'acquittement OK5, au cours d'une étape F40, à destination du proxy SIP 10.

Cette notification OK5 est reçue par le proxy SIP, via le canal de signalisation FS, au cours d'une étape E50.

Le proxy SIP 10 peut alors établir la communication entre le déposant X et le pair dépositaire PR, au cours d'une étape E55, par l'envoi, dans le canal de signalisation FS, à destination du déposant X, d'une notification d'acquittement OK6 conforme au protocole SIP.

Un flux média, ou flux de communication, FC, est ainsi établi entre le déposant X et le pair dépositaire PR (étape E60).

Pour des raisons de confidentialité, on préférera que toutes les informations qui transitent dans le flux média FC soient chiffrées.

Dans l'exemple de réalisation décrit ici, dès que le flux de communication FC est établi, le pair dépositaire PR commence à envoyer dans le flux de signalisation FS, une information de retour d'appel MRET au proxy SIP 10 (étape F45). Le proxy SIP 10 transmet cette information de retour d'appel MRET au déposant X (étape E65).

Sur réception de cette information de retour d'appel, le dispositif X peut par exemple allumer une diode clignotante.

En variante, un message de retour d'appel MRET peut être envoyé au dispositif X via le flux de communication FC.

Quoi qu'il en soit, cette information ou ce message de retour d'appel MRET est maintenu pendant toute la durée au cours de laquelle le flux de communication FC est établi.

Cette étape F45 d'envoi de message de retour d'appel MRET est suivie par une étape F50 au cours de laquelle le dispositif pair PR extrait les identifiants X du déposant Y du destinataire de la requête REQ3 reçue au cours de l'étape F30.

Cette étape d'extraction F50 est suivie par une étape F55 au cours de laquelle le dispositif pair PR génère un message d'invitation MINV et émet ce message dans le flux de communication FC à destination du déposant X. Optionnellement, ce message d'invitation MINV peut être personnalisé à partir de l'identifiant Y du destinataire.

L'utilisateur du dispositif X reçoit le message d'invitation MINV au cours d'une étape E70. Sur réception de ce message, il commence à envoyer son message M pour que celui-ci soit mémorisé temporairement dans les ressources HD du dispositif pair dépositaire PR.

Le message M est reçu dans le canal de communication FC et mémorisé par le dispositif pair dépositaire PR au cours d'une étape F60. Lorsque l'enregistrement du message est terminé, cette fin d'enregistrement pouvant être détectée suite à un silence ou à l'appui sur une touche DTMF par exemple, le dispositif pair dépositaire PR envoie, au cours d'une étape F65, un message d'acquittement MACK au déposant X.

Dans l'exemple décrit ici, ce message d'acquittement MACK est envoyé dans le flux de communication FC.

En variante, une information d'acquittement peut être envoyée, via le routeur d'appel 10, dans le flux de signalisation FS.

Le message M est ensuite stocké par le pair dépositaire PR dans la zone de stockage centralisée 100 au cours d'une étape F67.

Le stockage du message M est terminé, mais dans la variante préférée décrite ici, le dispositif pair PR envoie, dans le canal de communication FC, au cours d'une étape F70, un message de confirmation MCONF proposant à l'utilisateur du dispositif déposant X de réécouter, de modifier ou de supprimer le message M dans la zone de stockage centralisée.

Si l'utilisateur souhaite modifier le message, on modifie le message dans les ressources HD du dépositaire puis le dépositaire transfère le nouveau message dans la zone de stockage centralisée.

On supposera que l'utilisateur n'utilise pas cette possibilité et désire terminer la communication avec le pair dépositaire PR, par exemple en raccrochant son terminal.

Au cours d'une étape F72, le pair dépositaire PR efface alors le message M de son disque dur HD. On notera que si l'utilisateur choisit de modifier le message enregistré en réponse au message de confirmation MCONF et qu'un problème intervient (par exemple dû à la déconnexion de pairs dépositaire), la version précédente enregistrée à l'étape E67 reste sauvegardée dans la zone centralisée 100.

Cet état de raccrochage est détecté par le proxy SIP 10 au cours d'une étape E75, à la réception dans le flux de signalisation d'une requête SIP BYE1 (traduction du raccrochage de X). Le proxy 10 envoie alors la requête BYE2 au dépositaire PR au cours d'une étape E80.

Le pair dépositaire PR ayant reçu la requête BYE2 cesse d'émettre, au cours d'une étape F75, l'information de retour d'appel MRET dans le canal de signalisation FS.

Lorsque le dispositif Y auquel était destiné le message M se reconnecte au réseau de pairs, soit directement, soit via un autre pair, ce pair détecte, en interrogeant la zone de stockage centralisée 100, qu'un message est disponible pour ce terminal Y.

Ce pair télécharge alors le message depuis la zone de stockage centralisée 100 et convertit le message en un format acceptable par le destinataire Y.

Ce pair transmet alors le message à son destinataire puis, sur commande de l'utilisateur, efface le message de la zone de stockage centralisée.

## Revendications

1. Procédé de transmission d'un message (M) émis par un premier dispositif (X) dit "déposant" à destination d'un deuxième dispositif (Y) dit "destinataire" comportant, lorsque le destinataire (Y) est indisponible pour recevoir ledit message (M), une étape (F60) d'envoi dudit message (M) à un pair (PR) d'un réseau de pairs (1) dit "pair dépositaire", ledit procédé étant **caractérisé en ce qu'**il comporte :
- une étape de transfert (F67) dudit message (M) par ledit pair dépositaire dans une zone de sauvegarde centralisée (100) ;
- une étape de notification audit destinataire (Y) d'une information représentative du fait qu'un message (M) qui lui était destiné est mémorisé dans ladite zone de sauvegarde centralisée ; et
- une étape d'obtention dudit message (M), par le destinataire (Y), à partir de ladite zone de sauvegarde centralisée.

2. Procédé de transmission selon la revendication 1, **caractérisé en ce qu'**il comporte :
- une étape d'identification dudit pair dépositaire (PR) par un routeur d'appel (10) connecté audit réseau de pairs, parmi les pairs disponibles et ayant des ressources (HD) pour mémoriser ledit message (M) ;
- une étape de mémorisation (F60) dudit message par ledit pair dépositaire (PR) dans lesdites ressources (HD) ; et
- une étape (F72) d'effacement dudit message (M) desdites ressources (HD) après ladite étape de transfert (F67) de message dans ladite zone de sauvegarde centralisée (100).

3. Dispositif (PR) susceptible d'être connecté à un réseau de pairs (1) comportant :
- des moyens pour recevoir un message (M) émis par un premier dispositif (X) dit "déposant" à destination d'un deuxième dispositif (Y) dit "destinataire" ; et
- des moyens pour transférer ledit message (M) dans une zone de sauvegarde centralisée (100) en vue de son obtention ultérieure par ledit destinataire (Y), lorsque ledit destinataire (Y) est indisponible pour recevoir ledit message (M).

4. Dispositif (PR) selon la revendication 3, **caractérisé en ce qu'**il comporte :
- des moyens pour envoyer sur ledit réseau de pairs (1) une information (REPFN) selon laquelle il est adapté à mettre en oeuvre un procédé de transmission de messages ;
- des moyens pour réserver des ressources (HD) nécessaires à la mémorisation dudit message (M) ;
- des moyens pour mémoriser ledit message (M) dans lesdites ressources (HD) ; et
- des moyens pour effacer ledit message (M) desdites ressources (HD) après le transfert du message (M) dans ladite zone de sauvegarde centralisée (100).

5. Dispositif (PR) selon la revendication 4, **caractérisé en ce que**
- lesdits moyens pour réserver les ressources (HD) nécessaires à la mémorisation dudit message (M) réservent lesdites ressources (HD) sur réception d'une requête (REQ3) de réservation reçue par ledit dispositif (PR) sur ledit réseau de pairs (1) ;
et **en ce qu'**il comporte :
- des moyens pour extraire de ladite requête (REQ3) de réservation, au moins un identifiant (Y) du destinataire (Y) dudit message (M), et des moyens pour générer un message (MINV) d'invitation à partir dudit identifiant (Y), et pour émettre ce message d'invitation (MINV), à destination dudit déposant (X).

6. Dispositif (PR) selon l'une quelconque des revendications 3 à 5, **caractérisé en ce qu'**il comporte des moyens pour envoyer audit déposant (X), lorsque ledit message (M) a été stocké avec succès dans ladite zone de sauvegarde centralisée, un message d'acquittement (MACK) dans ledit flux de communication (FC) et/ou une information d'acquittement (MACK) dans ledit canal de signalisation (FS).

7. Dispositif (PR) selon l'une quelconque des revendications 3 à 6, **caractérisé en ce qu'**il comporte des moyens pour envoyer un message (MCONF) de confirmation, pour proposer à l'utilisateur dudit dispositif déposant (X) de réécouter, modifier ou supprimer ledit message (M), et des moyens pour retransmettre ledit message (M), le remplacer ou le supprimer dans ladite zone de sauvegarde centralisée (HD) en fonction de la réponse audit message de confirmation (MCONF).

8. Procédé d'enregistrement de message, susceptible d'être mis en oeuvre par un dispositif pair (PR) dans un réseau de pairs (1), comportant :
- une étape (F60) de réception d'un message (M), émis par un premier dispositif (X) dit "déposant" à destination d'un deuxième dispositif (Y) dit "destinataire", et mémorisation du message (M) dans lesdites ressources (HD),
- une étape de transfert dudit message (M) dans une zone de sauvegarde centralisée (100) en vue de son obtention ultérieure par ledit destinataire (Y), lorsque ledit destinataire (Y) est indisponible pour recevoir ledit message (M).

9. Programme d'ordinateur (PG2) comportant des instructions pour l'exécution des étapes du procédé d'enregistrement de messages selon la revendication 8 lorsque ledit programme est exécuté par un ordinateur.

10. Support d'enregistrement (52) lisible par un ordinateur sur lequel est enregistré un programme d'ordinateur (PG2) comprenant des instructions pour l'exécution des étapes du procédé d'enregistrement de messages selon la revendication 8.

11. Système de messagerie comportant au moins un dispositif pair (PR) selon l'une quelconque des revendications 2 à 7 et une zone de sauvegarde centralisée (100).

12. Système de messagerie selon la revendication 11, **caractérisé en ce qu'**il comporte en outre un routeur d'appel (10) apte à détecter que ledit destinataire (Y) n'est pas disponible pour recevoir ledit message, à identifier ledit dépositaire (PR) parmi les pairs dudit réseau disponibles et ayant des ressources suffisantes pour mémoriser ledit message et à établir un flux de communication (FC) entre ledit déposant (X) et ledit dépositaire (PR).
